Europäisches Patentamt

European Patent Office

Office européen des brevets

(19)

(11) **EP 0 881 234 A1**

(12) **EUROPEAN PATENT APPLICATION**
published in accordance with Art. 158(3) EPC

(43) Date of publication:
02.12.1998 Bulletin 1998/49

(51) Int. Cl.$^6$: **C08F 8/08**

(21) Application number: 96902449.6

(86) International application number:
PCT/JP96/00334

(22) Date of filing: 16.02.1996

(87) International publication number:
WO 97/30095 (21.08.1997 Gazette 1997/36)

(84) Designated Contracting States:
**DE ES FR GB IT NL**

(71) Applicant:
**DAICEL CHEMICAL INDUSTRIES, LTD.**
**Osaka-fu 590 (JP)**

(72) Inventors:
• OSHINO, Yasuhiro
Hiroshima 739-06 (JP)

• OHTSUKA, Yoshihiro
Hiroshima 739-06 (JP)

(74) Representative:
Portal, Gérard et al
Cabinet Beau de Loménie
158, rue de l'Université
75340 Paris Cédex 07 (FR)

(54) **PROCESS FOR PRODUCING EPOXIDIZED BLOCK COPOLYMER**

(57)      The present invention relates to a process for the preparation of an epoxidized block copolymer which is preferred as a modifier for a rubber-like polymer or a resinous polymer, an auxiliary modifier, adhesives, and sealants, and the like.

The epoxidized block copolymer in the present invention is characterized by conducting recovery of a polymer by a steam-stripping of an organic solvent slurry or an organic solvent solution of an epoxidized block copolymer (C) prepared by an epoxidation of a block copolymer composed of a polymer block (A) primarily composed of a vinyl aromatic hydrocarbon compound and a polymer block (B) primarily composed of a conjugated diene compound or a partially hydrogenated product thereof under the presence of surface active agents.

As the surface active agents, a nonionic surface active agent is preferred and, in particular, there is preferred a surface active agent having an average molecular weight of 3,000-20,000 and a polyoxyethylene content of 20-90% by weight, and which is represented by general formula (1), $HO(C_2H_4O)_a(C_3H_6O)_b(C_2H_4O)_cOH$ (wherein, all of a, b, and c represent the number of 1-1,000).

EP 0 881 234 A1

## Description

TECHNICAL FIELD

The present invention relates to a process for the preparation of an epoxidized block copolymer which is preferred as a modifier for a rubber-like polymer or a resinous polymer, an auxiliary agent for modifying, adhesives, and sealants, and the like.

BACKGROUND ART

A block copolymer composed of a vinyl aromatic hydrocarbon and a conjugated diene compound has been widely employed in fields such as a variety of modifiers and adhesives, because it is transparent and has an elasticity at ordinary temperatures identically to a vulcanized natural rubber or synthetic rubber in spite of being not vulcanized, and further, it has a processability at high temperatures identically to thermoplastic resins. In order to further improve the properties, there has been developed an epoxidized block copolymer which is obtained by epoxidation of unsaturated bonds derived from diene blocks in the above-described block copolymer. For example, as a composition containing the epoxidized block copolymer or uses thereof, JP-A-06/279538 discloses a composition with thermoplastic resins, JP-A-06/256417 discloses a compatibilizing agent for resins and a resin composition, and JP-A-06/340859 discloses a pressure-sensitive adhesive composition. The above descriptions are disclosed also in EP-A-0658603.

As a process for the preparation of the epoxidized block copolymer, there is a method for recovering the epoxidized block copolymer from an organic solvent slurry or an organic solvent solution prepared in an epoxidation reaction.

JP-A-05/125197 Official Gazette discloses a method for represipitating in isopropanol (a represipitation method) and a method for directly removing solvents alone under heating (a direct solvent-removal method). Also, as a typical process for the preparation of a rubber-like polymer, there has been usually conducted a method for recovering the rubber-like polymer by a steam stripping from an organic solution of the rubber-like polymer prepared by a solution polymerization. For example, JP-B-62/017497 Official Gazette shows a method for a steam stripping of a solution of a rubber-like polymer under the presence of a specific dispersant. Further, JP-B-68/017987 and JP-B-68/026177 Official Gazettes propose a method for charging a rubber solution into a steam stripping tank and an improvement for shapes of a nozzle in an apparatus. JP-B-69/002134 and JP-B-69/021346 Official Gazettes describe an improvement in a selection method of dispersants. Still further, JP-B-80/022489 Official Gazette shows a method for a steam stripping of a block copolymer composed of a styrenic hydrocarbon composition containing not less than 50% of a styrenic hydrocarbon and a conjugated diene compound using a salt of a copolymer between a styrenic hydrocarbon and an unsaturated acid.

However, the above-described methods for the preparation of an epoxidized block copolymer include the following problems.

(1) In the reprecipitation method, in the case that the concentration of the epoxidized block copolymer is high, a precipitated polymer becomes highly viscous, and it is difficult to separate it from solvents. On the other hand, in the case that the concentration is low, a large amount of solvents are required, and there are required multi-stage distillation columns for separating and recovering the solvents, resulting in being economically disadvantageous.

(2) In the direct method for solvent-removal, there is required a long time of period in heating for completely removing solvents, and there is a problem that epoxy groups having high reactivity ring-open during heating, whereby, an epoxidized block copolymer is lost.

(3) In the case of merely applying a steam-stripping method which is usually employed for the preparation of a rubber-like polymer to the preparation of the epoxidized block copolymer, because of high reactivity in epoxy groups, it is difficult to prepare an epoxidized block copolymer having a desired epoxy equivalent. Further, there is also a difficulty in operation such as adhering of a polymer to an apparatus because of reactivity in epoxy groups. Moreover, the epoxidized block copolymer shows a high water content, and it is difficult to prepare a sufficiently dried epoxidized block copolymer having a low water content.

DISCLOSURE OF THE INVENTION

The present inventors, as a result of an intensive investigation for solving the above-described problems, have found out a method for recovering an epoxidized block copolymer from an organic solvent slurry or an organic solvent solution of prepared in an epoxidation reaction, in which a steam-stripping is conducted in the presence of a surface active agent, by which solvents are readily removed, and a polymer can be conveniently recovered without thermal history for a long time of period, and attained to the completion of the present invention.

That is, the present invention provides a process for the preparation of an epoxidized block copolymer (D) characterized by recovering a polymer by steam-stripping an organic solvent slurry or an organic solvent solution of an epoxidized block copolymer (C) prepared by an epoxidation of a block copolymer composed of a polymer block (A) primarily composed of a vinyl aromatic hydrocarbon compound and a polymer block (B) primarily composed of a conjugated diene compound or a partially hydrogenated product thereof in the presence of a surface active agents.

Further, there is provided a process for the preparation of an epoxidized block copolymer (D) characterized by conducting the steps; neutralizing and/or water-washing an organic solvent slurry or an organic solvent solution of a polymer prepared by an epoxidation of an epoxidized block copolymer (C) composed of a polymer block (A) primarily composed of a vinyl aromatic hydrocarbon compound and a polymer block (B) primarily composed of a conjugated diene compound or a partially hydrogenated product thereof to prepare an organic solvent slurry or an organic solvent solution of a polymer having an acid value of not more than 5 mgKOH/g and, subsequently, recovering a polymer by steam-stripping the slurry or the solution at a temperature of from a boiling point of the solvent or an azeotropic point in the case that the solvent and water are azeotropically evaporated to not more than 120 °C in the presence of a surface active agent.

Still further, there is provided a process for the preparation of an epoxidized block copolymer (D) having a water content of less than 1% by weight characterized by conducting the steps; neutralizing and/or water-washing an organic solvent slurry or an organic solvent solution of an epoxidized block copolymer (C) prepared by an epoxidation of a block copolymer containing a polymer block (A) primarily composed of a vinyl aromatic hydrocarbon compound and a polymer block (B) primarily composed of a conjugated diene compound or a partially hydrogenated product thereof to prepare an organic solvent slurry or an organic solvent solution of a polymer having an acid value of not more than 5 mgKOH/g and, subsequently, conducting a steam-stripping of the slurry or the solution at a temperature of from a boiling point of the solvent or an azeotropic point in the case that the solvent and water are azeotropically evaporated to not more than 120 °C in the presence of a surface active agent and, drying the polymer after removing water to a water content of 1-30 % by weight from the slurry in which the polymer is dispersed.

Also, there is provided a process for the preparation of the epoxidized block copolymer (D) in which an epoxy equivalent in the epoxidized block copolymer is 140-2700.

And also, there is provided a process for the preparation of the epoxidized block copolymer (D) in which the surface active agent is a nonionic surface active agent.

And also, there is provided a process for the preparation of the epoxidized block copolymer (D) characterized in that the steam-stripping is conducted in the presence of 1-20,000 ppm (the weight proportion based on water in a steam-stripping tank) of a surface active agent having an average molecular weight of 3,000-20,000 and a polyoxyethylene content of 20-90% by weight, which is represented by general formula (1): $HO(C_2H_4O)_a(C_3H_6O)_b(C_2H_4O)_cOH$ (wherein, all of a, b, and c represent the number of 1-1,000).

And also, there is provided a process for the preparation of the epoxidized block copolymer (D) in which an HLB value in the surface active agents is 10-19.

And also, there is provided a process for the preparation of the epoxidized block copolymer (D) in which the use amount of the surface active agents is 1-20,000 ppm based on water in the steam-stripping tank.

In addition, there is provided a process for the preparation of the epoxidized block copolymer (D) characterized in that the steam-stripping is conducted in the presence of 1-10,000 ppm of a salt of a metal selected from K, Na, Mg, Ca, Al, and Zn, which is an auxiliary agent for a dispersant, based on water in the steam-stripping tank.

Also, there is provided a process for the preparation of an epoxidized block copolymer (D) in which the organic solvent is selected from cyclohexane, ethyl acetate, chloroform, toluene, xylene, and hexane.

Hereinafter, the present invention will be illustrated in detail.

BEST MODE FOR CONDUCTING THE INVENTION

[Block copolymer]

The "block copolymer" to be employed in the present invention means a block copolymer (A) composed of a polymer block primarily composed of a vinyl aromatic hydrocarbon compound and a polymer block (B) primarily composed of a conjugated diene compound. Further, the "partially hydrogenated product of a block copolymer" means a polymer in which unsaturated carbon bonds existing in the polymer block (B) of the block copolymer are partially hydrogenated by a hydrogenation reaction. Still further, the "epoxidized block copolymer (C)" in the present invention means a polymer in which there are epoxidized unsaturated carbon bonds existing in the block copolymer or the partially hydrogenated product thereof.

(i) As typical examples of the vinyl aromatic hydrocarbon compound capable of composing the block copolymer, there are exemplified a variety of alkyl-substituted styrenes such as styrene and α-methylstyrene, alkoxy-substituted styrenes, vinyl naphthalene, alkyl-substituted vinyl naphthalenes, divinylbenzene, and vinyl toluene, and the like. Of those, styrene is particularly preferred. Of those, one or more kinds can be also employed in combination.

(ii) As typical examples of the conjugated diene compound capable of composing the block copolymer, there are exemplified 1,3-butadiene, isoprene, 1,3-pentadiene, 2,3-dimethyl-1,3-butadiene, piperylene, 3-butyl-1,3-octadiene, and phenyl-1,3-butadiene, and the like. Of those, 1,3-butadiene and isoprene are preferred because of a low price and readily obtaining. Of those, one or more kinds can be also employed in combination.

(iii) The copolymerization ratio by weight of the vinyl aromatic vinyl hydrocarbon compound with respect to the conjugated diene compound which compose the block copolymer, is preferably 5/95 to 70/30, and more preferably 10/90 to 60/40.

(iv) A number average molecular weight of the block copolymer to be employed in the present invention is preferably from 5,000 to 60,000, more preferably 10,000 to 50,000. In a lower molecular weight, characteristics as a rubbery-state elastomer are not shown and, in a higher molecular weight, it is not preferred because of being not readily melted.

(v) Structure in the block copolymer is not particularly limited and, for example, there may be a block copolymer represented by A-B-A, B-A-B-A, and A-B-A-B-A, etc. which is composed of the vinyl aromatic hydrocarbon compound and the conjugated diene compound. Further, the structure of molecule itself may be any one of linear, branched and radial types, and further, may be any combination thereof. The block of the vinyl aromatic hydrocarbon compound in the block copolymer may uniformly distribute and, further it may distribute in a tapered state. Still further, in the copolymerized portion, there may coexist a plurality of portions in which the vinyl aromatic hydrocarbon compound uniformly distribute and/or a plurality of portions in which it distributes in a tapered state, respectively.

(vi) A process for the preparation of the block copolymer before epoxidation is not particularly limited, and it may be prepared by any processes. For example, as described in JP-B-65/023798, JP-B-72/003252, JP-B-73/002423, and JP-B-81/028925 Official Gazettes, etc., there can be exemplified a process for the preparation in the presence of an inert solvent using a lithium catalyst, and the like. In the block copolymer, the conjugated diene composing the block copolymer may be in advance partially hydrogenated.

(vii) A process for the preparation of the partially hydrogenated product of the block copolymer is not also particularly limited, and it may be prepared by any processes.

For example, as described in JP-B-67/008704 and JP-B-68/006636 Official Gazettes, there can be exemplified a process for the preparation by a hydrogenation of the block copolymer in the presence of an inert solvent using a catalyst for a hydrogenation. Although the amount to be hydrogenated is not particularly limited, it is required that in the case of successively conducting an epoxidation reaction, the unsaturated carbon bonds capable of reacting with an epoxidizing agent requires to be remained in the molecule.

[Epoxidized block copolymer (C) ]

In the present invention, the epoxidized block copolymer (C) is prepared by the epoxidation of the block copolymer prepared as described hereinabove or the partially hydrogenated product thereof.

(i) First of all, the block copolymer or the partially hydrogenated product thereof is mixed with an organic solvent to obtain an organic solvent slurry or an organic solvent solution of the block copolymer. As typical examples of the solvent to be employed in the case, there can be exemplified a linear or branched hydrocarbon such as pentane, hexane, heptane, and octane, an alicyclic hydrocarbon such as cyclopentane, cyclohexane, and cycloheptane, and an alkyl-substituted derivative thereof, an aromatic hydrocarbon such as benzene, naphthalene, toluene, and xylene, and alkyl-substituted derivatives thereof, an aliphatic carboxylic ester such as methyl acetate, ethyl acetate, and propyl acetate, and the like.
Of those, cyclohexane, ethyl acetate, chloroform, toluene, xylene, and hexane are preferred in view of solubility to the block copolymer or the partially hydrogenated product thereof and ease in recovery of the solvents. The use amount of the organic solvent preferably ranges in 100-10,000 parts by weight based on 100 parts by weight of the block copolymer. In the case of less than 100 parts by weight, excellent agitation cannot be unpreferably conducted. Further, in the case of more than 10,000 parts by weight, a large amount of solvent is substantially employed, resulting in being not economical.

(ii) Subsequently, the unsaturated bonds existing in the polymer block (B) is epoxidized using an epoxidation agent.

Epoxidation of the block copolymer or the partially hydrogenated product thereof can be conducted by a reaction with organic peracids, and the like. As the organic peracids, there are exemplified peracetic acid, perbenzoic acid, performic acid, and trifluoroperacetic acid, and the like. Further, the epoxidation can be also conducted by hydroperoxide or the combination of hydroperoxide with a fatty acid having a low molecular weight. Of those, peracetic acid is preferred as the epoxidation agent because it is industrially mass-produced, whereby, it can be obtained at a low price and, moreover, it has a relatively high stability. Use amount of the epoxidation agent to be employed is not particularly limited, and an appropriate amount can be freely employed depending upon conditions such as a reactivity in the epoxidation agent, a desired epoxidation degree, and the amount of the unsaturated bonds in the block copolymer or the partially hydrogenated product thereof, and the like.

(iii) Temperature in the epoxidation reaction is different depending upon the kind or amount of the epoxidation agent to be employed, solvents to be employed, and the block copolymer or the partially hydrogenated product thereof, and it is not particularly limited. For example, in the case that peracetic acid is employed as the epoxidation agent, the reaction temperature is preferably 0 to 70 °C. In not more than 0 °C, the reaction rate is slow and, in exceeding 70 °C, there unpreferably proceed ring-opening of epoxy groups produced and decomposition of peracetic acid.

(iv) Time of period in the epoxidation reaction is not particularly limited, and it is preferred in 0.1-72 hours in view of productivity.

(v) As other additives, in order to improve stability of peracetic acid in the epoxidation reaction, phosphates may be added in a reaction system. In the epoxidation, there can be optionally employed a catalyst composed of transition metals such as molybdenum, tungsten, chromium, and vanadium, silver and the like.

By the use of the catalyst composed of the transition metals, the reaction rate can be improved.

[Neutralization-washing with water]

(i) The organic solvent slurry or organic solvent solution of the epoxidized block copolymer (C) obtained is neutralized and/or washed with water. By neutralization and/or washing with water, there can be removed foreign substances such as acids by-produced in the epoxidation reaction.

(ii) The neutralization and/or washing with water is conducted until extent of an acid value of not more than 5 mg KOH/g in the organic solvent slurry or organic solvent solution.

If it is not more than 5 mgKOH/g, there can be prevented the ring-opening of the epoxy groups existing in the epoxidized block copolymer. The "acid value" herein means the weight of potassium hydroxide to be required in order to neutralize acids existing in 1 g of the organic solvent slurry or organic solvent solution of the epoxidized block copolymer, and it is measured by a titration method.

(iii) As an aqueous solution of alkalis to be employed for the neutralization, there can be exemplified an aqueous solution of the alkalis such as lithium hydroxide, sodium hydroxide, potassium hydroxide, calcium hydroxide, lithium carbonate, sodium carbonate, potassium carbonate, calcium carbonate, lithium hydrogen carbonate, sodium hydrogen carbonate, potassium hydrogen carbonate, sodium acetate, and potassium acetate. The alkalis are employed in an amount by mol to be required for obtaining the above-described acid value.

(iv) In order to suppress the ring-opening of the epoxy groups by heating in neutralizing, the neutralization is preferably conducted in a temperature range of 0-50 °C, and preferably 5-30 °C of the organic solvent slurry or organic solvent solution. It is to be noted that the washing with water may be continuously conducted or may be conducted by a batchwise style. In the case of the batchwise style, the washing with water is preferably conducted several times using 50-1,000 parts by weight of water based on 100 parts by weight of a reaction solution or slurry after the epoxidation. It is preferable to remove acids by increasing the number of washing adequately according to the usage of the epoxidation agent.

(v) In the washing with water, in order to excellently separate a water layer from an organic layer, there may be also added inorganic salts such as sodium chloride and sodium sulphate, and the like.

[Surface active agent]

The present invention is characterized by using a surface active agent in a steam-stripping which is described hereinafter.

(i) As the surface active agent to be employed in the present invention, there can he employed an anionic surface active agent, a nonionic surface active agent, a cationic surface active agent, and an amphoteric surface active agent, in general, which are publicly known.

(ii) As examples of the anionic surface active agent, there can be exemplified an alkyl fatty acid salt, an alkylbenzene sulphonate, a linear chain alkylbenzene sulphonate, an alkyl sulphate, an alkyl phosphate, a dialkylsulpho succinate salt, a polyoxyethylene alkylether sulphate, a polyoxyethylene alkylphenylether sulphate, a polyoxyethylene alkylether phosphate, and a sulphonate of a naphthalene-formalin condensate, and the like.

(iii) As the nonionic surface active agent, there can be exemplified at least one kind of surface active agents selected from a fatty acid ester of glycerin, a sorbitan ester, a fatty acid ester of propyleneglycol, a fatty acid ester of sugar, a citric mono(di or tri)stearate, a fatty acid ester of pentaerythritol, a fatty acid ester of trimethylol, a fatty acid ester of a polyglycerine, a glycerine fatty acid ester of a polyoxyethylene, a polyester, a sorbitan fatty acid ester of a polyoxyethylene, a fatty acid ester of a polyethylene glycol, a fatty acid ester of a polypropylene glycol, an aliphatic alcohol ether of a polyoxyethylene glycol, a polyoxyethylene alkylphenyl ether, an N,N-bis(2-hydroxyethylene) aliphatic amine, a condensate of a fatty acid with diethanolamine, a block polymer of a polyoxyethylene with a polyoxypropylene, a polyethylene glycol, and a polypropylene glycol. Particularly preferred nonionic surface active agent has a polyoxyethylene unit, and it is at least one kind of surface active agents selected from a glycerine fatty acid ester of a polyoxyethylene, a sorbitan fatty acid ester of a polyoxyethylene, a aliphatic alcohol ether of a polyoxyethylene glycol, a polyoxyethylene alkylphenyl ether, and a block polymer of a polyoxyethylene with a polyoxypropylene. In particular, there is preferred a block copolymer represented by the general formula (1): $HO(C_2H_4O)_a(C_3H_6O)_b(C_2H_4O)_cOH$ (wherein, a, b, and c represent all the integer) which is composed of a polyoxyethylene block and a polyoxypropylene block.

In the surface active agent represented by the general formula (1), an average molecular weight is preferably 3,000-20,000. In the case that the molecular weight is less than 3,000, dispersibility lowers in crumbs precipitated in the steam-stripping. Further, in the case that the molecular weight exceeds 20,000, not only dispersibility lowers, but also a dispersant remains in a large proportion in a polymer, resulting in that it adversely affects to physical properties of the polymer. The surface active agent preferably includes the polyoxyethylene block which composes the surface active agent represented by the general formula (1) in a proportion of 20-90% by weight of a whole. In the case that the proportion of the polyoxyethylene block is less than 20% by weight or exceeds 90% by weight, dispersibility in the crumbs becomes unpreferably worse.

Of the nonionic surface active agents, an agent having an HLB value of 10-19 is particularly preferred. The HLB value herein shows a balance in the amount of hydrophilic groups and lipophilic groups which composes a surface active agent and, in general, it is a value capable of readily measuring by an equation which is publicly-known in a field of the surface active agent. In the case that the HLB value is less than 10, a lipophilic property becomes excessively strong in the surface active agent, resulting in that micelles end in being formed at the temperature for a steam stripping and it does not effectively function. Also, in the case that the HLB value exceeds 19, an effect for stabilizing at an interlayer is small, and it is not effective. In the case that the kind of surface active agents is same, in the surface active agent including the polyoxyethylene block, an agent having a longer polyoxyethylene chain shows a larger HLB value, resulting in that a hydrophilic property becomes strong. Based on a structure and a molecular weight, etc. in the epoxidized block copolymer, an appropriate surface active agent is preferably selected from agents having the range of the HLB value.

(iv) As the cationic surface active agent, there can be exemplified a tetraalkyl ammonium salt, a trialkylbenzyl ammonium salt, and an alkylimidazolinium salt, and the like

(v) As the amphoteric surface active agent, there can be exemplified an alkylcarboxy betaine type, an alkylaminocarboxylic acid type, an alkylimidazoline type agent, and the like.

(vi) Of those, the nonionic surface active agent is particularly preferred in view of a low reactivity with epoxy groups existing in the epoxidized block copolymer and no deterioration in physical properties of a polymer even though it remains.

6

[Steam stripping]

In the present invention, in order to remove organic solvents from the organic solvent slurry or the organic solvent solution of the epoxidized block copolymer, a steam stripping is conducted in the presence of the surface active agent.

(i) The steam stripping itself can be conducted using a steam stripping method which is usually publicly-known. That is, there is added dropwise or mixed the organic solvent slurry or the organic solvent solution of the epoxidized block copolymer into a hot water, and steam is simultaneously blown to remove the organic solvent and to precipitate the epoxidized block copolymer. The steam stripping may be conducted by any one of a batchwise style or a continuous style. Hot water to be employed in the steam stripping is preferably produced by supplying steam into water. In addition, the hot water may be also produced by an outside heating source such as a heating medium, an electric heater, and steam. The concentration of the epoxidized block copolymer in the organic solvent slurry or the organic solvent solution is preferably 5-50% by weight and, particularly, it preferably ranges in 15-30% by weight.

(ii) In the steam stripping, there is employed at least one kind selected from the above-described surface active agents. The surface active agent may be added into water in the case of conducting the steam stripping, and it may be also added into a solution of the epoxidized block copolymer. Further, it may be also added into the both. It is to be noted that an aqueous solution (a filtered liquid) of the surface active agent, which is separated in the case of recovering the crumbs by filtration, may move again to a steam stripping tank to reuse.

(iii) Addition amount of the surface active agent is preferably 1-20,000 ppm, more preferably 5-5,000 ppm, and particularly preferably 10-500 ppm based on water in the tank for conducting the steam stripping. In the case of less than 1 ppm, dispersibility in the crumbs precipitated lowers and, in the case of exceeding 20,000 ppm, although dispersibility is improved, because properties of the polymer are adversely affected, it is not preferred. There is preferred a less addition amount within a range in which stabilized dispersibility in the crumbs can be maintained. In order to maintain the concentration of the surface active agent, the surface active agent may be continuously added into hot water in the tank during the steam stripping. Particularly, in a batchwise style, continuous addition of the surface active agent is effective for a decrease of the concentration of the surface active agent accompanied by an increase of the hot water by steam blowing. Further, in the case of a continuous style, although the surface active agent is moved out of a steam stripping tank together with water, in a steady state, the surface active agent may be maintained in 1-20,000 ppm based on water in the tank by the continuous addition of a corresponding amount of the surface active agent into hot water.

(iv) In order to improve dispersibility in water of a crumbs of the epoxidized block copolymer precipitated in the steam stripping tank, there may be optionally added an auxiliary agent for a dispersant such as inorganic salts in addition to the above-described surface active agent. Specifically, there can be employed a salt of a metal selected from K, Na, Mg, Ca, Al, and Zn. As typical examples, there are exemplified potassium sulphate, sodium sulphate, magnesium sulphate, aluminum sulphate, potassium carbonate, sodium carbonate, and potassium alum, and the like. Of those, potassium sulphate and sodium sulphate are preferred. The use amount of the metal salts is 0.1-10,000 ppm based on water in the steam stripping tank. In the case of less than 0.1 ppm, an effect by addition is small and, in the case of exceeding 10,000 ppm, thermal stability and transparency in a product polymer are adversely affected, resulting in being unpreferred. Particularly, those are preferably employed together with the surface active agent represented by the above-described general formula (1).

(5) Temperature of the water in the steam stripping tank ranges in temperatures exceeding a boiling point of organic solvent by which a solution or a slurry of the epoxidized block copolymer is formed or, in the case that the solution is azeotropically evaporated with water, a temperature range of not less than an azeotropic boiling point of the solvent and not more than 120 °C, preferably, a temperature range higher than 10 °C compared to the azeotropic boiling point of the organic solvent and not more than 110 °C, and more preferably a temperature range higher than 15 °C compared to the temperature and not more than 100 °C. In the case that the above-described temperature of the water is lower than the boiling point of organic solvent or the azeotropic boiling point, an effect for removing the solvent is worse, resulting in that there becomes larger the amount of the residual solvent in crumbs. Also, in the case of exceeding 120 °C, particles having larger sizes are not obtained in crumbs, polymers unpreferably adhere to wall and agitation blades, and the like, in a solvent-removing tank.

(6) Concentration of crumbs-state polymers dispersed into water by the steam stripping is preferably 0. 1-50% by weight, more preferably 5-30% by weight, and particularly, 10-15% by weight based on water in the steam stripping tank, in both of a batchwise style and a continuous style. If it is the range, there can be obtained crumbs having excellent particle sizes. It is to be noted that in the continuous style, although some amount of produced crumbs are slightly and continuously transferred to an outside of the steam stripping tank, the concentration of the crumbs may be preferably maintained in the above-described concentration range based on water inside the tank in a steady state.

(7) There may be washed a slurry of an organic solvent containing an epoxidized block copolymer changed to the crumbs-state in order to remove the surface active agents remained in the epoxidized block copolymer changed to the crumbs-state or adhered to the surface thereof. Method for washing is not particularly limited, and it is conducted by adding the slurry of an organic solvent into water or warmed water and agitating.

[Water-removal from crumbs]

Water content is lowered until 1-30% by weight by removing water from the crumbs-state epoxidized block copolymer containing water. The crumbs containing water is water-removed with a compressing type water-removal machine such as a roll, a Bunbury style water-removal machine, and a screw-extruding style water-removal machine. In the present invention, a multi-screw extruding compressing water-removal machine such as a single- or twin-screw type is preferred in view of an efficiency for removing water and workability. In the case that the water content is lowered to less than 1% by weight, a time of period for water-removal becomes too long, unpreferably resulting in that gelation is caused in a polymer by shear stress through the water-removal machine, or crumbs are occasionally loosened. On the other hand, in the case that the water content exceeds 30% by weight, a time of period for succeeding drying becomes too long. It is to be noted that in the present invention, crumbs changed to a slurry-state are preferably introduced into the compressing type water-removal machine after water is in advance removed until 35-60% by weight with a rotation style screen, a vibration screen, or a centrifugal water-removal machine.

[Drying of crumbs]

(i) Crumbs water-removed are dried, and the water content is lowered until less than 1% by weight, preferably less than 0.5% by weight, and more preferably less than 0.1% by weight. In the case that the water content is not less than 1% by weight, bubbles are formed in molding of the polymer, resulting in that there is unpreferably caused inferiority in an outer appearance such as silver streaks, and the like. Also, in the case that the epoxidized block copolymer is melted under heating, epoxy groups are occasionally and partially ring-opened by residual water. In the case that an acid value is high in the epoxidized block copolymer, it is synergetically caused, resulting in that a remarkable ring-opening of epoxy rings is also occasionally caused.

(ii) Method for drying the crumbs is not particularly limited, and there can be employed at least one kind of dryer such as a screw-extruding type or kneader-type dryer, an expander dryer, and a hot air circulating dryer. A particularly preferred dryer is a multi-screw ventilating and extruding type dryer such as a single-screw or twin-screw type. In the present invention, drying can be also conducted by an apparatus in which a water-removal machine is combined with a dryer. As a preferred one as the apparatus, there is exemplified a ventilation type extruder having at least one, preferably, 2-4 pieces of slits for water-removing, and equipped with twin or more screws.

[Epoxidized block copolymer (D)]

(i) Epoxidized block copolymer (D) can be obtained in the form of a foamed crumbs-state, particles-state, or powder-state, and it may be also molded into a shape of a strand-state and pellet-state. In the case of molding, there can be also added appropriate auxiliary agents for molding.

(ii) Epoxy equivalent in the epoxidized block copolymer (D) ranges in 140-2,700, in particular, preferably 200-2,000. In the case that the epoxy equivalent is less than 140, elastic properties become apt to be not shown in the epoxidized block copolymer and, in the case that it is more than 2700, peculiar properties by epoxidation become apt to be not shown, alike resulting in being unpreferred. According to the present invention, a copolymer having 140-2,700 can be stably provided.

Herein, the epoxy equivalent is calculated by the following equation, and it means the weight of the epoxidized block copolymer based on 1 mol of oxirane oxygen.

[Epoxy equivalent=1600/Concentration (% by weight) of oxirane oxygen in the epoxidized block copolymer]

It is to be noted that the concentration of oxirane oxygen is measured by a titration with an acetic acid solution of hydrogen bromide, and a larger epoxy equivalent shows a lower concentration of oxirane oxygen and, contrarily, a smaller one shows a higher concentration of oxirane oxygen.

[Additive]

In the epoxidized block copolymer obtained according to the present invention, there are optionally employed a variety of additives, for example, an anti-aging agent, a crosslinking agent, a thermal stabilizer, an ultraviolet ray absorbent, an anti-static agent, a lubricant, a flame retardant, a pigment, or inorganic fillers such as silica, talc, carbon, and the like, a reinforcing material such as organic fibers, inorganic fibers, and carbon black, other thermoplastic resins, and a softener such as plasticizers and oils, and the like. A period for adding these is not particularly limited, and it may be any step for finally obtaining the epoxidized block copolymer.

A thermal stabilizer, and the like may be added into, for example, a solution or a slurry of an organic solvent containing the epoxidized block copolymer before conducting steam stripping.

Examples

Hereinafter, although the present invention is illustrated by Examples, the present invention is not limited within a range of the Examples.

[Method for measurements]

(i) Concentration of oxirane oxygen
There was measured % by weight of oxirane oxygen derived from epoxy groups occupied in the block copolymer by a titration with an acetic acid solution of hydrogen bromide.

(ii) Epoxy equivalent was calculated by the following equation after measuring the weight of the epoxidized block copolymer based on 1 mol of oxirane oxygen.
Epoxy equivalent=1600/Concentration (% by weight) of oxirane oxygen in the epoxidized block copolymer

(iii) Dispersibility
A dispersed state of a polymer in the steam stripping tank was judged according to the following standard.

$\bigcirc$: A state in which crumbs having particle size of not more than 20 mm are uniformly dispersed in water, and crumbs do not adhere to agitating blades and wall of an apparatus, and further, crumbs do not mutually aggregate.

$\triangle$: A state in which although a polymer is dispersed in water as crumbs, particle size is not uniform, and crumbs are partially aggregated, and crumbs slightly adhere to agitating blades and wall of an apparatus.

X: A state in which although a polymer is not almost dispersed in water as crumbs, and it gathers as several pieces of masses, and a large amount of crumbs adhere to agitating blades and wall of an apparatus.

(iv) Haze value
An injection-molded plate having the thickness of 2 mm was molded from an epoxidized block copolymer obtained, and transparency thereof was measured according to JIS K7105.

(v) Foaming ability
Foaming state in a steam stripping tank was judged according to the following standards.

$\bigcirc$: A state in which foaming is not almost observed, or although it is slightly observed, operation is not quite obstructed.

$\triangle$: A state in which although foaming is observed and foaming is intermittently caused, operation is very slightly obstructed.

X: A state in which foaming is observed and foaming is continuously caused, and operation is obstructed.

(Surface active agent)

Table 1 shows the surface active agents employed in respective Examples and Comparative Examples.

Table 1

| Surface active agent (Number in parenthesis shows HLB value) | Name of chemical substances |
|---|---|
| Emulgen PP-290 | A polyoxyethylene-polyoxypropylene Block polymer |
| Emulgen 147(16.3) | A polyoxyethylene lauryl ether |
| Emulgen 408(10.0) | A polyoxyethylene oleyl ether |
| Emulge.n 985(18.9) | A polyoxyethylene nonyl phenyl ether |
| Electrostripper F | A potassium alkylphosphate |
| Emulgen 930(15.1) | A polyoxyethylene nonyl phenyl ether |
| Kohtamin 24P | Lauryltrimethyl ammonium chloride |
| Leodol SP-P10 | A sorbitan monopalmitate |
| Emanone 3199 | A polyethylene glycol monostearate |

(Example 1)

300 parts by weight of a polystyrene-polybutadiene-polystyrene (SBS) block copolymer ("TR-2000" manufactured by Nihon Synthetic Rubber, Ltd.) was dissolved into 1500 parts by weight of ethyl acetate, and then 169 parts by weight of an ethyl acetate solution containing 30% by weight of peracetic acid was continuously added dropwise, followed by conducting an epoxidation reaction at 40 °C for 3 hours while agitating.

Reaction liquid was cooled to an ordinary temperature, and it was washed with a pure water to obtain an ethyl acetate solution of an epoxidized polystyrene-polybutadiene-polystyrene (ESBS) polymer. Concentration in the ethyl acetate solution of the block copolymer was 20%, and an acid value was 0.9 mgKOH/g.

On conducting a steam stripping of the solution, 100 ppm of a nonionic surface active agent (Emulgen PP-290 manufactured by Kao Co, Ltd., an average molecular weight: approximately 10,000, the content of oxyethylene block: 90% by weight) based on the water was added into water in a steam stripping tank, and the steam stripping was conducted at water temperature of 90 °C by blowing steam from a lower portion of the tank.

Polymer was stably dispersed in a state of crumbs having size of 3-6 mm, and there were not observed mutual adhesion of resin and adhesion of resin to wall of apparatuses and agitating blades. In the above-described operations, organic solvent in the polymer solution was removed by a steam-distillation to recover.

On the other hand, the polymer was separated from a slurry containing precipitated crumbs by a centrifugal separator.

Polymer crumbs obtained are porous, and those were able to be readily dried at 60 °C for 2 hours in a usual hot air dryer. Experimental results are shown in Table 2.

(Examples 2-4)

The same operations were followed as in the Example 1, except that the kind and the amount of surface active agents in a steam stripping were changed as shown in Table 2. Results are shown in Table 2.

(Example 5)

In a jacketed reaction vessel equipped with an agitator and a thermometer, 300 parts by weight of polystyrene-polybutadiene-polystyrene block polymer ["TR-2000" manufactured by Japan Synthetic Rubber, Ltd.] was dissolved into 3000 parts by weight of cyclohexane. There were mixed 40 ml of di-p-tollylbis(1-cyclopentadienyl)titanium/cyclohexane solution (concentration of 1 mmol/liter) and 8 ml of n-butyllithium solution (concentration of 5 mmol/liter) which are a catalyst for hydrogenation at the conditions of 0 °C and hydrogen pressure of 2 kg/cm$^2$, followed by adding to the above-described polymer solution and by allowing to react at hydrogen partial pressure of 2.5 kg/cm$^2$ for 30 minutes.

Solvent was removed from a partially hydrogenated-polymer solution obtained by drying at a reduced pressure, and the polymer was taken out (Hydrogenation ratio of double bonds derived from butadiene was 30%).

There was dissolved 300 parts by weight of the partially hydrogenat☐ed copolymer into 1,500 parts by weight of cyclohexane, and 300 parts by weight of ethyl acetate solution containing 30% of peracetic acid was continuously added dropwise, followed by epoxidizing while agitating at 40 °C for 3 hours. The reaction liquid was cooled to ordinary temperatures, followed by being washed with a pure water to obtain an ethyl acetate solution of an epoxidized partially hydrogenated polystyene-polybutadiene-polystyene block copolymer (ESEBS).

Concentration of the ethyl acetate solution of the epoxidized block copolymer was 26% by weight, and an acid value was 1.0 mgKOH/g. The same operations were followed as in the Example 1, except that the kind and the amount of surface active agents employed in a steam stripping of the solution were changed as shown in Table 2. Results are shown in Table 2.

(Example 6)

300 parts by weight of polystyrene-polyisoprene-polystyrene (SIS) block copolymer ["Kaliflex TR1111" manufactured by Shell Chemicals, Co.] was dissolved into 1,500 parts by weight of cyclohexane, and 222 parts by weight of an ethyl acetate solution containing 30% by weight of peracetic acid was continuously added dropwise, followed by conducting an epoxidation reaction at 40 °C for 3 hours while agitating. The reaction liquid was cooled to ordinary temperatures, followed by being washed with a pure water to obtain an ethyl acetate solution of an epoxidized polystyrene-polyisoprene-polystyrene block polymer (ESIS). Concentration of the ethyl acetate solution of the epoxidized block copolymer was 21% by weight, and an acid value was 1.1 mgKOH/g. The same operations were followed as in the Example 1, except that the kind and the amount of surface active agents employed in a steam stripping of the solution were changed as shown in Table 2.

Results are shown in Table 2.

(Comparative Example 1)

An ethyl acetate solution of ESBS, which was obtained by the quite same methods as in the Example 1, was put in a vat so that the depth of liquid is adjusted to 5mm, followed by drying by a direct solvent-removal method in a vacuum dryer at 60 °C for 2 hours. Concentration of the ethyl acetate in the ESBS was 1% by weight, and residual amount of the solvent in the ESBS was apparently much compared to the Example 1. Also, surface of rubber slightly looked viscous, and mutual adhesion of the rubber was observed after placing at room temperatures.

(Comparative Example 2)

An ethyl acetate solution of ESBS, which was obtained by the quite same methods as in the Example 1, was put in a vat so that the depth of liquid is adjusted to 5 mm, followed by drying by a direct solvent-removal method in a vacuum dryer at 80 °C for 5 hours. Concentration of the ethyl acetate in the ESBS obtained was 0.1% by weight. Concentration of oxirane oxygen in the ESBS obtained was 2.0% by weight, and loss of epoxy groups was distinctly observed compared to the Example 1.

(Comparative Example 3)

An ethyl acetate solution of ESBS, which was obtained by the quite same methods as in the Example 1, was supplied into isopropyl alcohol while agitating to precipitate (a reprecipitation method). However, it was not tidily precipitated, and it was a rice-cake state in which it was exceedingly difficult to recover the epoxidized block copolymer alone by filtration.

(Comparative Example 4)

In a steam stripping of an ethyl acetate solution of ESBS which was obtained by the quite same methods as in the Example 1, it was conducted without using a surface active agent. All of precipitated resin adhered to agitating blades and wall of an apparatus, resin mutually adhered to each other, or a large mass was formed, and it was exceedingly difficult to recover the resin as crumbs.

Table 3 described hereinafter shows results of the above-described experiments, residual amount of solvent in the resin after drying, concentration of oxirane oxygen, a Haze value, and partial experimental conditions together with comparative Examples described below. It is to be noted that the experimental conditions are the same descriptions as described in Table 2.

(Example 7)

The same operations were followed as in the Example 1, except that 100 ppm of the nonionic surface active agent "Leodol SP-P10" (a sorbitan monopalmitate/HLB value of 6.7) manufactured by Kao was employed based on water as a surface active agent in the steam stripping in the Example 1. Results are shown in Table 2. Precipitated crumbs are slightly worse in dispersibility, and although precipitated partial resins adhered to agitating blades and wall of the apparatus, it was able to stably recover resins other than adhered resins in a state of crumbs.

(Example 8)

The same operations were followed as in the Example 1, except that 100 ppm of the nonionic surface active agent "Emanone 3199" (a polyethylene glycol monostearate/HLB value of 19.1) manufactured by Kao was employed based on water as a surface active agent in the steam stripping in the Example 1.
Precipitated crumbs are slightly worse in dispersibility, and although precipitated partial resins adhered to agitating blades and wall of the apparatus, it was able to stably recover resins other than adhered resins in a state of crumbs.

(Example 9)

300 parts by weight of polystyrene-polybutadiene-polystyrene (SBS) block copolymer ["TR-2000" manufactured by Nihon Synthetic Rubber, Ltd., a styrene/butadiene by weight ratio of 40/60] was dissolved into 1,500 parts by weight of ethyl acetate, and 169 parts by weight of an ethyl acetate solution containing 30% by weight of peracetic acid was continuously added dropwise, followed by conducting an epoxidation reaction at 40 °C for 3 hours while agitating. The reaction liquid was cooled to ordinary temperatures, followed by being washed with a pure water to obtain an ethyl acetate solution of an epoxidized polystyrene-polybutadiene-polystyrene block polymer (ESBS). Concentration of the ethyl acetate solution of the epoxidized block copolymer was 21% by weight, and an acid value was 1.0 mgKOH/g. On conducting a steam stripping of the solution, a nonionic surface active agent (Emulgen PP-290 manufactured by Kao Co, Ltd.) was added in 500 ppm based on the water into water in a steam stripping tank, and the steam stripping was conducted at water temperature of 95 °C by blowing steam from a lower portion of the tank. The polymer was stably dispersed in a state of crumbs having size of 3-6 mm, and there were not observed mutual adhesion of resin and adhesion of resin to wall of apparatuses and agitating blades.
In the above-described operations, organic solvent in the polymer solution was removed by a stream-distillation to recover. Crumbs containing water were supplied into a single-screw extruder type press to obtain a polymer having the water content shown in Table 4. After that, the polymer obtained hereinabove was supplied into a twin-screw one-stage ventilation extruder, and it was extruded at a cylinder temperature of 200 °C, screw rotation speed of approximately 200 rpm, and ventilation pressure of approximately 200 torr to dry. The polymer extruded from an edge of the extruder was pelletized with a cutter. Experimental results are shown in Table 4.

(Examples 10-12)

The same operations were followed as in the Example 9, except that the kind and the amount of surface active agents in a steam stripping were changed as shown in Table 4. Results are shown in Table 4.

(Example 13)

In a jacketed reaction vessel equipped with an agitator and a thermometer, 300 parts by weight of polystyrene-polybutadiene-polystyrene block copolymer ["TR-2000" manufactured by Japan Synthetic Rubber, Ltd.] was dissolved into 3,000 parts by weight of cyclohexane. There were mixed 40 ml of di-p-tollylbis(1-cyclopentadienyl)titanium/cyclohexane solution (concentration of 1 mmol/liter) and 8 ml of n-butyllithium solution (concentration of 5 mmol/liter) which are a catalyst for hydrogenation at the conditions of 0 °C and hydrogen pressure of 2 kg/cm$^2$, followed by adding to the above-described polymer solution and allowing to react at hydrogen partial pressure of 2.5 kg/cm$^2$ for 30 minutes.
Solvent was removed from a partially hydrogenated-polymer solution obtained by drying at a reduced pressure, and the polymer was taken out (Hydrogenation ratio of double bonds derived from butadiene was 30%). There was dissolved 300 parts by weight of the partially hydrogenated copolymer into 1,500 parts by weight of cyclohexane, and 300 parts by weight of ethyl acetate solution containing 30% of peracetic acid was continuously added dropwise, followed by epoxidizing while agitating at 40 °C for 3 hours. The reaction liquid was cooled to ordinary temperatures, followed by being washed with a pure water to obtain an ethyl acetate solution of an epoxidized partially hydrogenated polystyrene-polyisoprene-polystyrene block copolymer (ESEBS). Concentration in the ethyl acetate solution of the epoxidized block copolymer was 22% by weight. Solvent was removed and resins were recovered by the same operations as in the Example 9, except that the kind and the amount of surface active agents employed in a steam stripping were changed as shown in Table 4.

(Example 14)

300 parts by weight of polystyrene-polyisoprene-polystyrene (SIS) block copolymer ["Kaliflex TR1111" manufactured by Shell Chemicals, Ltd., a styrene/isoprene weight ratio of 21/79] was dissolved into 1,500 parts by weight of cyclohexane, and 222 parts by weight of an ethyl acetate solution containing 30% by weight of peracetic acid was continuously added dropwise, followed by conducting an epoxidation reaction at 40 °C for 3 hours while agitating. The reaction liquid was cooled to ordinary temperatures, followed by being washed with a pure water to obtain a solution of an epoxidized polystyrene-polyisoprene-polystyrene (ESIS) polymer. Concentration in the solution of the block copolymer was 21% by weight. The same operations were followed as in the Example 9, except that the kind and the amount of surface active agents employed in a steam stripping of the solution were changed as shown in Table 4.

(Example 15)

The same operations were followed as in the Example 9, except that there was not conducted washing with water of the epoxidized reaction crude liquid in the Example 9 to obtain a block copolymer. Epoxy equivalent in a resin obtained was 680, and loss of epoxy group was distinctly observed compared to results in the Example 9. Also, dispersibility of crumbs was slightly worse in the steam stripping. Experimental results are shown in Table 5.

(Example 16)

The same operations were followed as in the Example 13, except that there was not conducted washing with water of the epoxidized reaction crude liquid in the Example 13 to obtain a block copolymer. Epoxy equivalent in a resin obtained was 380, and loss of epoxy groups was distinctly observed compared to the results in the Example 13. Also, dispersibility of crumbs was slightly worse in the steam stripping.

(Example 17)

The same operations were followed as in the Example 9, except that water-removal was conducted using an open roll in place of the extruder type press in the Example 9, and water content was adjusted to 40% by weight to obtain a block copolymer. Epoxy equivalent in resin obtained was 610, and loss of epoxy groups was distinctly observed compared to results in the Example 9. Also, it showed a high value in water content.

(Example 18)

The same methods were followed as in the Example 9, except that a product having a higher water content was obtained by controlling a pressure in a ventilating portion to obtain a block copolymer. Epoxy equivalent was 600 in a resin obtained, and loss of epoxy groups was distinctly observed compared to results in the Example 9.

(Comparative Example 5)

The same methods were followed as in the Example 9, except that a steam stripping was conducted without using a surface active agent to obtain a block copolymer. Dispersibility of crumbs in the steam stripping was exceedingly worse compared to the Example 9. Because of a large size in the crumbs obtained, water occluded in the crumbs was not able to be sufficiently removed.

(Comparative Example 6)

The same methods were followed as in the Example 14, except that a steam stripping was conducted without using a surface active agent in the Example 14 to obtain a block copolymer.
Dispersibility of crumbs in the steam stripping was exceedingly worse compared to the Example 14. Because of a large size in the crumbs obtained, water occluded in the crumbs was not able to be sufficiently removed.

(Example 19)

The same methods were followed as in the Example 9, except that there was not conducted washing with water of the epoxidized reaction liquid, and further, water-removal was conducted using an open roll in place of the extruder type press in the Example 9, and water content was adjusted to 40% by weight to obtain a block copolymer. Epoxy equivalent was 750 in a resin obtained, and remarkable loss of epoxy groups was observed compared to results in the Example 9. Also, dispersibility of crumbs was slightly worse in the steam stripping. Further, it showed a higher value in water content.

(Example 20)

300 parts by weight of polystyrene-polybutadiene-polystyene (SBS) block copolymer ["TR-2000" manufactured by Japan Synthetic Rubber, Ltd., a styrene/butadiene weight ratio of 40/60] was dissolved into 1,500 parts by weight of ethyl acetate, and 169 parts by weight of an ethyl acetate solution containing 30% by weight of peracetic acid was continuously added dropwise, followed by conducting an epoxidation reaction at 40 °C for 3 hours while agitating. The reaction liquid was cooled to ordinary temperatures, followed by being washed with a pure water to obtain an ethyl acetate solution of an epoxidized polystyrene-polybutadiene-polystyrene (ESBS) block polymer. Concentration in ethyl acetate solution of the polymer was 20% by weight, and an acid value was 1.0 mgKOH/g. In a steam stripping of the polymer solution, the nonionic surface active agent ("Pluronic F-68" manufactured by Asahi Denka, Ltd.) was employed in 100 ppm based on water, and a steam stripping was conducted at 90 °C. The polymer was stably dispersed in a state of crumbs having a size of 3-6 mm, and there were not observed mutual adhesion of polymers and adhesion to wall of apparatuses and agitation blades.

In the above-described operations, organic solvent in the organic solvent solution was removed and recovered by a steam-distillation. On the other hand, the polymer was separated and recovered from a slurry in a state of crumbs by a centrifugal separator. Polymer crumbs obtained were porous, and those were dried at 50 °C for 10 hours in a hot air circulating dryer.

Results are shown in Table 6.

(Examples 21-23)

The same operations were followed as in the Example 20, except that the kind and the amount of surface active agents in a steam stripping were changed as shown in Table 6. Results are shown in Table 6.

(Example 24)

In a jacketed reaction vessel equipped with an agitator and a thermometer, 300 parts by weight of polystyrene-polybutadiene-polystyrene block copolymer ["TR-2000" manufactured by Japan Synthetic Rubber, Ltd.] was dissolved into 3,000 parts by weight of cyclohexane. There were mixed 40 ml of di-p-tollylbis(1-cyclopentadienyl)titanium/cyclohexane solution (concentration of 1 mmol/liter) and 8 ml of n-butyllithium solution (concentration of 5 mmol/liter) which are a catalyst for hydrogenation at the conditions of 0 °C and hydrogen pressure of 2 kg/cm$^2$, followed by adding to the above-described polymer solution and by allowing to react at hydrogen partial pressure of 2.5 kg/cm$^2$ for 30 minutes. Solvent was removed from a partially hydrogenated-polymer solution obtained by drying at a reduced pressure, and the polymer was taken out (hydrogenation ratio of double bonds derived from butadiene was 30%). There was dissolved 300 parts by weight of the partially hydrogenated block copolymer into 1,500 parts by weight of cyclohexane, and 300 parts by weight of ethyl acetate solution containing 30% of peracetic acid was continuously added dropwise, followed by epoxidizing while agitating at 40 °C for 3 hours. The reaction liquid was cooled to ordinary temperatures, followed by being thrice washed with an equivalent amount of pure water to the reaction liquid to obtain a solution of an epoxidized partially hydrogenated polystyrene-polybutadiene-polystyrene copolymer (ESEBS). An acid value of the solution was 1.1 mgKOH/g. The same operations were followed as in the Example 20, except that the kind and the amount of surface active agents in a steam stripping of the polymer solution were changed as shown in Table 6. Results are shown in Table 6.

(Example 25)

300 parts by weight of polystyrene-polyisoprene-polystyrene (SIS) block copolymer ["Kaliflex TR1111" manufactured by Shell Chemicals, Ltd., a styrene/isoprene weight ratio of 21/79] was dissolved into 1,500 parts by weight of cyclohexane, and 222 parts by weight of an ethyl acetate solution containing 30% by weight of peracetic acid was continuously added dropwise, followed by conducting an epoxidation reaction at 40 °C for 3 hours while agitating. The reaction liquid was cooled to ordinary temperatures, followed by being washed thrice with an equivalent amount of pure water to the reaction liquid to obtain a solution of an epoxidized polystyrene-polyisoprene-polystyrene (ESIS) block polymer. An acid value of the solution was 1.0 mgKOH/g.

The same operations were followed as in the Example 20, except that the kind and the amount of surface active agents in a steam stripping of the polymer solution were changed as shown in Table 6. Results are shown in Table 6.

(Example 26)

The same operations were followed as in the Example 20, except that there was changed the amount of dispersant in a steam stripping of the polymer solution, and there was added 5 ppm (a value based on water in the steam stripping tank) of sodium sulphate anhydride. Results are shown in Table 6.

(Comparative Example 7)

The same operations were followed as in the Example 20, except that the dispersant in a steam stripping as in the Example 20 was not employed at all to conduct an epoxidation reaction, solvent-removal, and recovery of a polymer. Results are shown in Table 7.

(Comparative Example 8 and Example 27)

The same methods were followed as in the Example 20, except that the kind and the amount of the dispersant in a steam stripping were changed as shown in Table 7 to conduct an epoxidation reaction, solvent-removal, and recovery of a polymer.

(Example 28)

The same operations were followed as in the Example 20, except that a POE-POP (polyoxyethylene-polyoxypropylene) block copolymer having the POE (polyoxyethylene) content of 50% by weight and an average molecular weight of 30,000 was employed as a dispersant in a steam stripping. Results are shown in Table 7.

(Example 29)

The same operations were followed as in the Example 20, except that the kind and the amount of the dispersant in a steam stripping were changed as shown in Table 7. Results are shown in Table 7.

(Example 30)

The same operations were followed as in the Example 20, except that a polyoxyethylene having an average molecular weight of 8,000 was employed as a dispersant in a steam stripping.
Results are shown in Table 7.

(Example 31)

The same operations were followed as in the Example 24, except that the kind and the amount of the dispersant in a steam stripping were changed as shown in Table 7. Results are shown in Table 7.

(Example 32)

The same operations were followed as in the Example 25, except that the kind and the amount of the dispersant in a steam stripping were changed as shown in Table 7. Results are shown in Table 7.

Table 2

|  | A | B/addition amount (ppm) | Dispersibility | Ox | Haze |
|---|---|---|---|---|---|
| Example 1 | ESBS | PP-290/100 | O | 3.4 | 4.0 |
| Example 2 | ESBS | 147/300 | O | 3.3 | 4.5 |

Table 2 (continued)

|  | A | B/addition amount (ppm) | Dispersibility | Ox | Haze |
|---|---|---|---|---|---|
| Example 3 | ESBS | 408/100 | O | 3.4 | 5.0 |
|  |  | 985/100 |  |  |  |
| Example 4 | ESBS | F/50 | O | 3.3 | 4.0 |
| Example 5 | ESEBS | 980/50 | O | 5.6 | 4.0 |
| Example 6 | ESIS | 24P/70 | O | 4.4 | 5.0 |

A: an epoxidized rubbery polymer
B: addition amount of a surface active agent
Ox: oxirane oxygen concentration (% by weight)
Haze (%): transparency
Addition amount: weight ratio based on water in a steam stripping tank

Table 3

|  | A | B/addition amount | Dispersibility | Water content after dried (% by weight) | Ox | Haze |
|---|---|---|---|---|---|---|
| Comparative Example 4 | ESBS | - | X | 1.12 | 3.5 | 4.0 |
| Example 7 | ESBS | L/100 | △ | 3.3 | 3.4 | 4.1 |
| Example 8 | ESBS | E/100 | △ | 3.4 | 3.4 | 4.1 |

A: Epoxidized block copolymer
B: Surface active agent
L: Leodohl SP-P10, E: Emanone 3199
Solvent amount after dried: all<0.01% by weight (Organic solvent amount in a resin after dried)

Table 4

| | Acid value in polymer solution (mgKOH/g) | Concentration of polymer solution (wt%) | Surface active agent | | Temperature in steam stripping (°C) | Dispers bility | Water content after water -removal (wt%) | Water content after dried (wt%) | Epoxy equivalent |
|---|---|---|---|---|---|---|---|---|---|
| | | | Kind Note 1 | Amount (ppm) Note 2 | | | | | |
| Example 9 | 1.0 | 21 | A | 500 | 95 | ○ | 18 | 0.05 | 530 |
| Example 10 | 1.1 | 20 | B | 500 | 95 | ○ | 20 | 0.07 | 520 |
| Example 11 | 1.0 | 19 | C | 500 | 95 | ○ | 15 | 0.09 | 530 |
| Example 12 | 0.9 | 20 | B | 100 | 95 | ○ | 16 | 0.06 | 520 |
| Example 13 | 1.1 | 22 | D | 50 | 95 | ○ | 20 | 0.05 | 285 |
| Example 14 | 1.2 | 21 | E | 70 | 90 | ○ | 17 | 0.07 | 360 |

Note 1: All surface active agents employed are products by Kao, Ltd. Composition in the respective surface active agents of A-E is shown below.

A: Emulgen PP-290 (a polyoxyethylene-polyoxypropylene block polymer)

B: Emulgen 147 (a polyoxyethylene lauryl ether)

C: Kotamin 24P (lauryltrimethyl ammonium chloride)

D: Emulgen 985 (a polyoxyethylene nonyl phenyl ether)

E: Emulgen 930 (a polyoxyethylene nonyl phenyl ether)

Note 2: Addition amount shows the weight proportion based on water in a steam stripping tank.

Table 5

| | Acid value (KOHmg/g) | Concentration of polymer solution (wt%) | Surface active agent Note 1 | | Temperature in steam stripping (° C) | Dispers ibility | Water content after water -removal (wt%) | Water content after dried (wt%) | Epoxy equivalent |
|---|---|---|---|---|---|---|---|---|---|
| | | | Kind | Amount (ppm) | | | | | |
| Example 15 | 40.0 | 17 | A | 500 | 95 | △ | 18 | 0.05 | 680 |
| Example 16 | 45.1 | 20 | D | 50 | 95 | △ | 20 | 0.07 | 380 |
| Example 17 | 1.0 | 19 | A | 500 | 95 | ○ | 40 | 0.2 | 610 |
| Example 18 | 1.0 | 20 | A | 100 | 95 | ○ | 16 | 2.0 | 600 |
| Comparative Example 5 | 1.1 | 22 | - | - | 95 | × | 32 | 1.6 | 530 |
| Comparative Example 6 | 1.2 | 21 | - | - | 90 | × | 30 | 1.5 | 365 |
| Example 19 | 40.5 | 17 | A | 500 | 95 | △ | 40 | 0.3 | 750 |

Table 6

| | Epoxidized block copolymer | Dispersant | | | Addition amount (ppm) Note 2 | Dispersibility | Foaming Ability |
|---|---|---|---|---|---|---|---|
| | | Kind Note 1 | Average molecular weight | POE content (wt%) | | | |
| Example 20 | ESBS | F-68 | 9000 | 80 | 100 | O | O |
| Example 21 | ESBS | L-122 | 4500 | 20 | 300 | O | O |
| Example 22 | ESBS | P-85 | 4800 | 50 | 100 | O | O |
| Example 23 | ESBS | F-108 | 15000 | 80 | 50 | O | O |
| Example 24 | ESEBS | F-68 | 9000 | 80 | 50 | O | O |
| Example 25 | ESIS | F-68 | 9000 | 80 | 70 | O | O |
| Example 26 | ESBS | F-68 | 9000 | 80 | 50 | O | O |
| | | $Na_2SO_4$ | - | - | 5 | | |

Note 1: Kind of dispersants employed is all the nonionic surface active agents "Pluronic series"

manufactured by Asahi Denka, Ltd.

Note 2: Addition amount shows the weight proportion based on water in a steam stripping tank.

EP 0 881 234 A1

Table 7

| | Epoxidized block copolymer | Dispersant | | | Addition amount (ppm) | Dispersibility | Foaming ability |
|---|---|---|---|---|---|---|---|
| | | Kind | Average molecular weight | POE Content (wt%) | | | |
| Comparative Example 7 | ESBS | - | - | - | - | X | O |
| Comparative Example 8 | ESBS | F-68 | 9000 | 80 | 50000 | △ | X |
| Example 27 | ESBS | L-34 | 1500 | 40 | 100 | X | O |
| Example 28 | ESBS | Note 1 | 30000 | 50 | 100 | △ | △ |
| Example 29 | ESBS | L-61 | 2000 | 10 | 100 | △ | △ |
| Example 30 | ESBS | Note 2 | 8000 | 100 | 100 | X | △ |
| Example 31 | ESEBS | L-31 | 1000 | 10 | 100 | X | O |
| Example 32 | ESIS | L-31 | 1000 | 10 | 100 | X | O |

Note 1: POE-POP block copolymer having an average molecular weight of 30,000 and POE content

of 50%

by weight

Note 2: Polyoxyethylene having an average molecular weight of 8,000

EP 0 881 234 A1

POSSIBILITY OF UTILIZATION IN INDUSTRIES

According to the present invention, there can be readily prepared the epoxidized block copolymer by recovering an epoxidized block copolymer from an organic solvent slurry or an organic solvent solution of the epoxidized block copolymer in which there is epoxidized a block copolymer composed of a polymer block (A) primarily composed of a vinyl aromatic hydrocarbon compound and a polymere block (B) primarily composed of a conjugated diene compound or a partially hydrogenated product thereof.

According to the present invention, there can be readily and stably prepared the epoxidized block copolymer having a low water content and a specified epoxy equivalent range.

## Claims

1. A process for the preparation of an epoxidized block copolymer (D) characterized by recovering a polymer by a steam-stripping of an organic solvent slurry or an organic solvent solution of an epoxidized block copolymer (C) prepared by an epoxidation of a block copolymer composed of a polymer block (A) primarily composed of a vinyl aromatic hydrocarbon compound and a polymer block (B) primarily composed of a conjugated diene compound or a partially hydrogenated product thereof in the presence of a surface active agent.

2. A process for the preparation of an, epoxidized block copolymer (D) characterized by conducting the steps; neutralizing and/or water-washing an organic solvent slurry or an organic solvent solution of a polymer prepared by an epoxidation of an epoxidized block copolymer (C) composed of a polymer block (A) primarily composed of a vinyl aromatic hydrocarbon compound and a polymer block (B) primarily composed of a conjugated diene compound or a partially hydrogenated product thereof to prepare an organic solvent slurry or an organic solvent solution of a polymer having an acid value of not more than 5 mgKOH/g and, subsequently, recovering a polymer by conducting steam-stripping said slurry or said solution at a temperature of from a boiling point of said solvent or an azeotropic point in the case that said solvent and water are azeotropically evaporated to not more than 120 °C in the presence of a surface active agent.

3. A process for the preparation of an epoxidized block copolymer (D) having a water content of less than 1% by weight characterized by conducting the steps; neutralizing and/or water-washing an organic solvent slurry or an organic solvent solution of an epoxidized block copolymer (C) prepared by an epoxidation of a block copolymer containing a polymer block (A) primarily composed of a vinyl aromatic hydrocarbon compound and a polymer block (B) primarily composed of a conjugated diene compound or a partially hydrogenated product thereof to prepare an organic solvent slurry or an organic solvent solution of a polymer having an acid value of not more than 5 mg KOH/g and, subsequently, conducting a steam-stripping of said slurry or said solution at a temperature of from a boiling point of said solvent or an azeotropic point in the case that said solvent and water are azeotropically evaporated to not more than 120 °C in the presence of a surface active agent and, drying the polymer after removing water to a water content of 1-30 % by weight from said slurry in which the polymer is dispersed.

4. A process for the preparation of the epoxidized block copolymer (D) as claimed in claim 3, wherein an epoxy equivalent in said epoxidized block copolymer is 140-2700.

5. A process for the preparation of the epoxidized block copolymer (D) as claimed in any one of claims 1-3, wherein said surface active agent is a nonionic surface active agent.

6. A process for the preparation of the epoxidized block copolymer (D) as claimed in claim 5, wherein said steam-stripping is conducted in the presence of 1-20,000 ppm (the weight proportion based on water in a steam-stripping tank) of a surface active agent having an average molecular weight of 3,000-20,000 and a polyoxyethylene content of 20-90% by weight, that is presented by general formula (1) : $HO(C_2H_4O)_a(C_3H_6O)_b(C_2H_4O)_cOH$ (wherein, all of a, b, and c represent the number of 1-1,000).

7. A process for the preparation of the epoxidized block copolymer (D) as claimed in claim 5, wherein an HLB value in said surface active agents is 10-19.

8. A process for the preparation of the epoxidized block copolymer (D) as claimed in any one of claims 1-3, wherein the use amount of said surface active agents is 1-20,000 ppm based on water in said steam-stripping tank.

9. A process for the preparation of the epoxidized block copolymer (D) as claimed in any one of claims 1-3, wherein said steam-stripping is conducted in the presence of 1-10,000 ppm of a salt of a metal selected from K, Na, Mg, Ca, Al, and Zn, which is an auxiliary agent for a dispersant, based on water in said steam-stripping tank.

10. A process for the preparation of an epoxidized block copolymer (D) as claimed in any one of claims 1-3, wherein said organic solvent is selected from cyclohexane, ethyl acetate, chloroform, toluene, xylene, and hexane.

# EP 0 881 234 A1

## INTERNATIONAL SEARCH REPORT

| | International application No. |
|---|---|
| | PCT/JP96/00334 |

**A. CLASSIFICATION OF SUBJECT MATTER**

Int. Cl$^6$ C08F8/08

According to International Patent Classification (IPC) or to both national classification and IPC

**B. FIELDS SEARCHED**

Minimum documentation searched (classification system followed by classification symbols)

Int. Cl$^6$ C08F8/00, C08F8/08

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 48-20889, B1 (Asahi Chemical Industry Co., Ltd.), June 25, 1973 (25. 06. 73), Claim (Family: none) | 1 - 10 |
| A | JP, 59-219302, A (Japan Synthetic Rubber Co., Ltd.), December 10, 1984 (10. 12. 84), Claim (Family: none) | 1 - 10 |

☐ Further documents are listed in the continuation of Box C.  ☐ See patent family annex.

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| July 3, 1996 (03. 07. 96) | July 16, 1996 (16. 07. 96) |

| Name and mailing address of the ISA/ | Authorized officer |
|---|---|
| Japanese Patent Office | |
| Facsimile No. | Telephone No. |

Form PCT/ISA/210 (second sheet) (July 1992)

23